# EUROPEAN PATENT APPLICATION

(11) **EP 4 223 112 A1**
(43) Date of publication of application: **09.08.2023**
(21) Application number: 22154802.7
(22) Date of filing: 02.02.2022
(51) Int. Cl.: A01K 5/02, A01K 5/01, A01K 1/02

(54) **A PIGLET FEEDER AND METHOD FOR FEEDING PIGLETS 0-21 DAYS AND A KIT COMPRISING LIQUID FEEDER, DRY FEED DISPENSER, AND A DRINKING BOWL**

(71) Applicant: LB Farm Advisor ApS, 5600 Faaborg (DK)
(72) Inventor: Brunse, Lars, 5600 Faaborg (DK)
(74) Representative: Patrade A/S

(57) **Abstract**

A piglet feeder (10) for catering a viscous liquid feed, such as gruel or milk, to piglets aged 0-21 days, said piglet feeder (10) comprising:
- a trough (20) comprising a trough section (21) with a trough section volume (22) and at least one trough connector (23) at the trough section (21);
- a retainer (30) comprising a retainer connector (32) complementary to the trough connector (23) and the retainer (30) being configured for releasably retaining a bottle (40) comprising a bottle volume (42) and a feed port (41),
wherein the trough connector (23) and the retainer connector (32) are adapted such that, during use, the feed port (41) divide the trough section volume (22) by defining a feed volume (25) under the feed port (41), where said feed volume (25) being smaller than the bottle volume (42) of the bottle (40), thereby restricting the amount of feed discharged from the bottle volume (42) into the feed volume (25).

## Description

### Field of the Invention

The present invention relates to a piglet feeder designed to enable milk and gruel feeding and a system comprising sections for milk and gruel feeding, a dry feed dispenser, and a drinking bowl designed for reducing the mortality rate of piglets.

### Background of the Invention

A common problem in pig breeding is the mortality rate among piglets. In Denmark, around 23% of piglets die within the first two days of their lives, a percentage that has been roughly constant the past 10 years. To bring down the mortality rate and heighten the welfare among pigs, the Danish politicians and industry made an agreement in 2014 that focused lowering the mortality rate to 16% by 2020. Despite many efforts, the mortality rate remains unchanged.

A sow is moved to the farrowing barn around five days before farrowing. The farrowing barn often comprises three zones: a sow zone, where the sow nurses the piglets, a nesting zone for sleeping and being kept warm, as it is heated to an elevated temperature such as 34°C whereas the ambient temperature outside the nest is 22°C, and an activity and feeding zone, where the piglets have access to dry feed and a drinking cup. The piglets will move between the three zones.

A common cause of death among piglets is being crushed by the weight of the mother sow. The piglets are most vulnerable the first two days after birth and can easily become sick, because they are small, weak, and have not yet gained much immunity. As the sow only has 14 teats and can give birth to 20-22 piglets, there are not enough teats for all the piglets. The first born and biggest piglets get the front teats of the sow which contain the most milk. The weakest piglets are left to fight over the last teats containing the least amount of milk and are left both hungry and without the raw milk that boosts their immune system. The weak piglets will seek the sow for food and warmth creating situations where the piglets risk being crushed when the sow moves. Being crushed is a common cause of death among these piglets, and most of them die on an empty stomach. Thus, the solution seems simple - feed the piglets.

Liquid feed is often served in the activity area in a trough all at once to avoid moisture in the nesting area as the piglets may get into the trough and drag the feed around afterwards, however the piglets are most likely to stay in the sow zone and nesting zone the first few days after their birth and thus the piglets will rarely move to the activity area. Many farrowing barns have additional feed for the weaker pigs in a through in the activity and feeding zones, however often the piglets will not discover the additional feed before being crushed.

Further, when piglets are fed liquid feed in the trough it is often left over time which creates an environment for bacteria to grow in. The piglets are most vulnerable, and can easily become sick, the first two days after birth as they are small, weak, and have not yet gained much immunity.

To accommodate the mortality rate, attempts have been made to move some of the piglets from the mother sow to a nurse sow. Another attempt involves artificial teats that resemble the teats of a sow placed in the feed and activity zone, however, the piglets often struggle with figuring out how to get feed from them.

The problem has not been solved despite the industries best wishes, thus there has been a long-felt need for a solution to bring down the mortality rate among piglets, however, none of the many initiatives have been successful.

### Object of the Invention

The object of the invention is to provide a piglet feeder and a kit for feeding piglets designed to lower the mortality rate of piglets.

### Description of the Invention

An object of the invention is achieved by a piglet feeder for catering a viscous liquid feed, such as gruel, to piglets aged 0-21 days. The piglet feeder comprises:
- a trough comprising a trough section with a trough section volume and at least one trough connector at the trough section;
- a retainer comprising a retainer connector complementary to the trough connector, the retainer is configured for releasably retaining a bottle comprising a bottle volume and a feed port;
wherein the trough connector and the retainer connector are adapted such that, during use, the feed port divides the trough section volume by defining a feed volume under the feed port, where said feed volume is smaller than the bottle volume of the bottle thereby restricting the amount of feed discharged from the bottle volume into the feed volume.

The retained bottle may comprise a viscous liquid such as gruel or a thin liquid such as milk or water. During use, a bottle is arranged in the retainer in a position where the bottle volume is substantially above the feed port. By arranging the bottle volume substantially above the feed port during use, the gravity assists in discharging the content of the bottle into the feed volume.

The placement of the feed port in the trough section volume that divides the trough section volume into a feed volume under the feed port, act as a restrictor limiting the amount of feed discharged into the feed volume. As the size of the feed volume is smaller than the size of the bottle volume, the feed contained in the bottle volume will fill the feed volume with feed and continuously refill the feed volume as the piglets ingest feed from the feed volume.

By continuously refilling the feed volume with feed discharged from the bottle volume, the feed in the feed volume is continuously replaced and stays fresh longer as the bottle during use prohibits oxygen from entering the bottle volume, which is essential for avoiding or at least reducing development of bacteria. Since bacteria in the bottle is reduced, this enables the piglet feeder to be positioned in a nesting zone of a farrowing barn. The nesting zone is a heated zone and therefore the nesting zone is very rarely used for feeding as feed normally would become foul.

To decrease the mortality rate among piglets within the first two days, the piglet feeder may be moved into the nesting zone, where the piglets are kept warm, to give them a feeding option away from the sow, in the zone they are most likely to be in. By moving the piglet feeder, the weak piglets will gain some strength to fight for access to a teat, but will not constantly be hungry and swarm the sow when there is no more milk left. Initial tests have shown that it is sufficient to have the piglet feeder positioned in the heated zone for 0-2 days as the piglets will move into the activity zone after two days. Thus, after approximately 2 days the piglet feeder can be moved out of the heated zone. It is preferred to have the piglet feeder in the activity zone, since the feed will deteriorate faster in the heated zone even though the piglet feeder according to the invention can prolong the feed lifetime in the heated zone significantly.

The movable piglet feeder may comprise a small trough section volume and feed volume eliminating the risk of the piglets walking into and out of the feed volume and thereby dragging the moist content around the nesting zone.

In an embodiment, the feed volume may be equal to or less than 20% of the size of the bottle volume.

The feed port may comprise an opening larger than Ø25 mm to ensure that a viscous liquid feed, such as gruel, can pass through the opening.

Initial tests have shown that use of the piglet feeder according to the invention increases the number of surviving piglets by 1-2 piglets per litter. In one case, where the piglet feeder was positioned in the nesting zone for the first two days, the mortality rate of piglets, who were too weak to get a teat of the sow, fell by 80 % such that the number of surviving piglets in this particular litter increased by 4 piglets.

In an aspect, the retainer comprises one or more braces configured for supporting the circumference of a bottle.

The bottle may be secured to the retainer by the one or more braces.

The one or more braces may be constructed in a rigid material. The one or more braces may be constructed in a metal or a polymeric material.

When the retainer comprises two or more braces, the bottom brace may have a smaller circumference than the one or more top braces. The bottom brace may support the bottle near the narrowest part close to the feed port.

In an embodiment, the bottom brace and the at least one top brace may be constructed in different materials. The bottom brace may be constructed in a rigid material and the top braces may be constructed in a flexible material.

The top brace may be of an elastic material to enable retaining of bottles with different circumferences.

In another embodiment, the retainer may comprise a single brace for supporting the bottle.

In an aspect, the one or more braces comprise circumference adapting means adaptable for retaining different sizes of bottles.

In an embodiment, the retainer comprises two or more braces constructed in different materials, wherein at least one of the one or more top braces comprise circumference adapting means and the bottom brace is in a rigid material. The one or more top braces may comprise teeth, apertures, grooves, or slots configured for engaging the circumference adapting means. The top brace may be constructed in a natural material such as leather, or a metal or a polymeric material.

The circumference adapting means may be a buckle, a hose clamp, a sliding clasp. The brace and circumference adapting means may be a toothed belt and a clip, ensuring both adaptability and quick replacement of bottles with the same circumference.

The circumference adjusting means may enable the retainer to retain bottles of different volumes such as but not limited to: 250mL, 500mL, 750mL, 1000mL, 5000mL.

In an aspect, the piglet feeder comprises a mounting element connected to the trough, the mounting element comprises a mounting aperture configured for mounting the piglet feeder on a wall.

Bolts, screws, or other fastening means may be inserted through the mounting aperture into the wall, thereby mounting the piglet feeder onto the wall.

The mounting element may comprise one or more mounting apertures arranged to evenly distribute the load of the piglet feeder.

The one or more mounting apertures may be circular, oval, square, or have another advantageous shape configured for being engaged by a fastening mean, such as a screw or a bolt.

The one or more mounting apertures may comprise a slot, such as a keyhole slot, to enable a quick mounting and dismounting. By using a slot, such as a keyhole slot, the piglet feeder is easily moved from the nesting zone to the activity zone and vice versa to cater to the piglets' development and changing needs.

In an aspect, the piglet feeder comprises a flange upwardly from the trough section.

When the trough comprises more than one trough section, the flange may extend along all neighbouring trough sections.

The mounting element comprising one or more mounting apertures may be arranged in the flange in a configuration to evenly distribute the load of the piglet feeder.

In an aspect, the at least one trough connector comprises one or more slide bars configured for being in sliding communication with the retainer connector thus enabling the retainer to be removed from the piglet feeder.

The slide bars may create an elongated guide for the retainer when being inserted into the trough connector.

The slide bars may comprise a movement restrictor ensuring a minimum feed volume. The movement restrictor may be an obstruction, a ledge, a pin and hole, or another mean to prevent the retainer in sliding too far down.

The slide bars may have advantageously shaped protrusions, such as L-shaped or T-shaped. The slide bars may have a shape corresponding to the shape of the retainer connector for enabling the retainer connector of the retainer to slide in the slide bars.

The trough section may have a corresponding trough connector comprising a single slide bar or a pair of slide bars, wherein the single slide bar may be T-shaped, and the pair of slide bars may be two L-shaped slide bars. When the trough comprises more than one trough section, the trough sections may use the same trough connector or different trough connectors.

In an aspect, the one or more slide bars are positioned on the flange.

The slide bars may be arranged in in pairs or alone along the flange for releasably connecting different feeding units to create different feeding stations in each trough section. The trough sections that use the same type of slide bars enabling the layout to be flexible and interchangeable.

In an aspect, the piglet feeder comprises a feed adjuster unit connected to the flange, and the retainer comprises a threaded channel, and the feed adjuster unit comprises a bolt extending through the feed adjuster unit into the threaded channel, wherein rotation of the bolt causes displacement of the retainer.

The retainer is placed in the trough connector by sliding the retainer connectors into the slide bars which are acting as elongated guides. The feed adjuster unit is connected to the retainer by the bolt going through a bolt recess in the feed adjuster unit and into the threaded channel in the retainer. Rotating the bolt causes displacement of the retainer connectors along the guide defined by the slide bars, thereby increasing or decreasing the feed volume.

In an aspect, the feed adjuster unit comprises a protrusion for engaging a top of the flange or the flange comprises a flange recess complementary to the protrusion.

The slide bars guide the displacement of the retainer along the longitudinal axis of the slide bars. The protrusion is releasably connected to the top of the flange or a recess in the flange. By engaging the flange, the protrusion creates a relation between the flange and the retainer by defining the position of the retainer in the slide bars in relation to the flange. The feed adjuster unit comprises support legs created by recesses, the support legs are configured for vertically supporting the body of the retainer. The vertical support may give stability to the retainer when not fully supported by the slide bars, for instance when the feed adjuster unit is adjusted to create the maximum feed volume.

The protrusion may limit the displacement to be within a specified range ensuring that the feed port of a retained bottle does not extend above the lowest point of a peripheral edge of the trough section volume causing the feed to overflow.

In an aspect, the trough may be made of polyester concrete. Polyester concrete is a sturdy material with a relatively high density and, as a consequence, the piglet feeder may weigh 2 kg or more. This will help stabilize the piglet feeder and makes the piglet feeder moveable in the farrowing barn without additional fasteners. Thereby, it becomes easier for a user to move the piglet feeder between the different zones of the farrowing barn.

Other parts of the piglet feeder may likewise be made of polyester concrete.

In an aspect, the trough comprises two or more trough sections each comprising a trough section volume.

The different trough sections may have common connector means enabling interchangeable feeding options.

The trough comprising two or more through sections each with a trough section volume enables a multitude of feeding options and adaptability in catering to the piglets' needs depending on their development.

The different trough section volumes may be separated by partition walls restricting the content of one trough section volume to enter a neighbouring trough section volume.

The trough sections may be used separately or in combination with one another.

An object of the invention is achieved by a method for feeding piglets gruel, a thin porridge or semi-liquid feed used for piglets during the first 0-21 days of their lives. The method comprises acts of:
- providing a bottle comprising a bottle volume for containing feed and a feed port allowing feed to passage into and out of the bottle volume and a trough section configured for containing feed dispensed from the bottle volume;
- mounting the bottle relative to the trough section, wherein the feed port is placed in the trough section defining a feed volume smaller than the bottle volume; and
- passively releasing feed from the bottle volume into the feed volume as the piglets remove the feed from the feed volume, thus continuously filling the feed volume.

The bottle or the retainer may comprise a closing mean for restricting outflow of feed comprised in the bottle volume through the feed port during the step of mounting the bottle.

In an aspect, the method may further comprise acts of:
- removing the bottle from the trough section;
- refilling the bottle with feed or alternatively replacing the bottle with a full second bottle; and
- remounting the bottle or the second bottle in the retainer.

As the piglets ingest the feed from the feed volume, the bottle volume is emptied. When the bottle volume is empty, the bottle may be removed, cleaned and refilled if the piglets need more feed. Another option is to replace the bottle with a full second bottle. After refilling or replacing the bottle, the bottle is mounted in the retainer.

In an aspect, the method further comprises a step of positioning the trough section in a nesting zone of a farrowing barn.

The position of the bottle in the trough section volume creates a clean environment inside the bottle volume and prevents bacteria from developing. The clean environment makes it possible to place the piglet feeder in the heated nesting zone of the farrowing barn. As the piglets are most likely to stay in the sow zone or the nesting zone, placing the piglet feeder in the nesting zone increases the likelihood of the weaker piglets surviving.

The trough sections may be used separately or in combination with one another.

The trough sections may comprise different feeding units providing dry feed, liquid, or other types of feed.

An object of the invention is achieved by a kit for feeding piglets. The kit comprises:
- one or more piglet feeders according to the invention as previously described, wherein the trough comprises two or more trough sections each trough section defining a trough section volume;
- one or more dry feed distributer configured for being in sliding communication with at least one trough connector, the dry feed distributor comprising an inner containment volume, and a dry feed port;
- one or more liquid dispensers comprising at least one liquid dispenser connector adapted for being retained by at least one trough connector.

The elements of the kit may be interchangeable allowing the kit for feeding piglets to develop and cater to the different needs of piglets as they grow.

By introducing the dry feed distributor and the liquid dispenser early, the piglets may slowly learn how to access the dry feed and activate the liquid dispenser, which is essential for their further development.

### Description of the Drawing

Embodiments of the invention will be described in the figures, wherein:
Fig. 1 illustrates a piglet feeder;
Fig. 2 illustrates a schematic view of the bottle volume, the trough section volume, and the feed volume;
Fig. 3 illustrates three different zones in a farrowing barn;
Fig. 4 illustrates a trough comprising three trough sections each with a trough section volume;
Fig. 5 illustrates a retainer;
Fig. 6 illustrates a dry feed distributor and a piglet feeder comprising a feed adjuster unit;
Fig. 7 illustrates a kit comprising a piglet feeder, a liquid dispenser, and a dry feed distributor
Fig. 8 illustrates a method for feeding piglets.

### Detailed Description of the Invention

| **Item** | **No** |
|---|---|
| Piglet feeder | 10 |
| Trough | 20 |
| Trough section | 21, 211, 212 |
| Trough section volume | 22, 221, 222 |
| Trough connector | 23 |
| Slide bar | 24 |
| Feed volume | 25 |
| Retainer | 30 |
| Threaded channel | 31 |
| Retainer connector | 32 |
| Braces | 33 |
| Circumference adapting means | 34 |
| Bottle | 40 |
| Feed port | 41 |
| Bottle volume | 42 |
| Mounting element | 50 |
| Mounting aperture | 51 |
| Flange | 60 |
| Feed adjuster unit | 70 |
| Bolt | 71 |
| Protrusion | 72 |
| Dry feed distributor | 80 |
| Inner containment volume | 81 |
| Dry feed port | 82 |
| Liquid dispenser | 90 |
| Liquid dispenser connector | 91 |
| Method | 100 |
| Providing | 110 |
| Mounting | 120 |
| Passively releasing | 130 |
| Removing | 140 |
| Refilling | 150 |
| Replacing | 160 |
| Remounting | 170 |
| Positioning | 180 |
| Sow zone | Z 1 |
| Nesting zone | Z2 |
| Activity zone | Z3 |

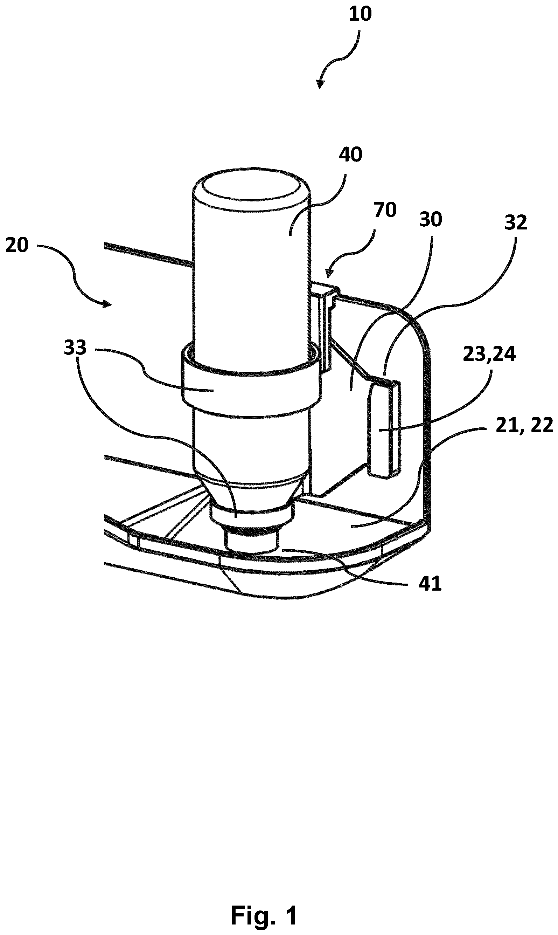

Fig. 1, 6, and 7 illustrate a piglet feeder.

The piglet feeder 10 comprises a trough 20 comprising a trough section 21 and a trough section volume 22 configured for containing feed for piglets. The feed may be a viscous liquid feed, such as gruel, or liquids such as milk or water and may contain additives. At least one trough connector 23 is arranged at the trough section 21 and comprises one or more slide bars 24 arranged on a flange that extend upwardly from the trough section.

The piglet feeder 10 comprises a retainer 30 comprising a retainer connector 32 shaped for being in sliding communication with the slide bars thus enabling the trough connector to releasably retain the retainer.

The retainer 30 further comprise braces 33 configured for releasably retaining the circumference of a bottle 40. The retained bottle 40 comprises a bottle volume 42 for containing feed and a feed port 41 for creating a passage allowing feed to enter into and out of the bottle volume 42.

The piglet feeder 10 comprises a feed adjuster unit 70 supported by the upper edge of the flange 60 and support the side of the retainer 30.

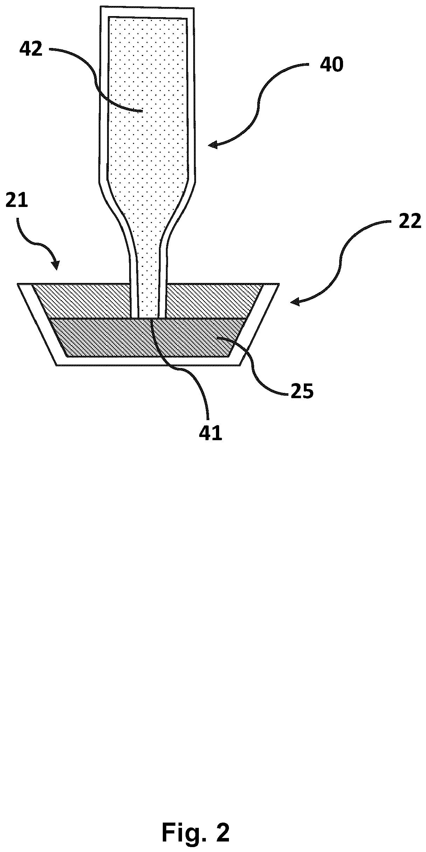

During use, the bottle is retained, by the braces 33, in a position where the bottle volume 42 is placed substantially above the feed port 41, as illustrated in figure 2. By placing the bottle volume 42 substantially above the feed port 41, the feed port divides the trough section volume and defines a feed volume underneath the feed port 41, wherein feed from the bottle volume 42 will be discharged into the feed volume 25 by means of gravity until the feed volume is filled. The placement of the retainer connector 32 in the slide bars 24 defines the placement of the feed port 41 in the trough section volume and thereby defines the size of the feed volume 25. By moving the retainer 30 upwards or downwards, the feed volume is increased or decreased.

When the piglets eat feed from the feed volume 25, the gravity ensures that the gap created by the piglets consuming the feed will be filled with feed from the bottle volume 42. This help create a clean environment inside the bottle volume 42 and help increase the longevity and freshness of the feed contained in the bottle volume 42 by minimizing the growth of bacteria.

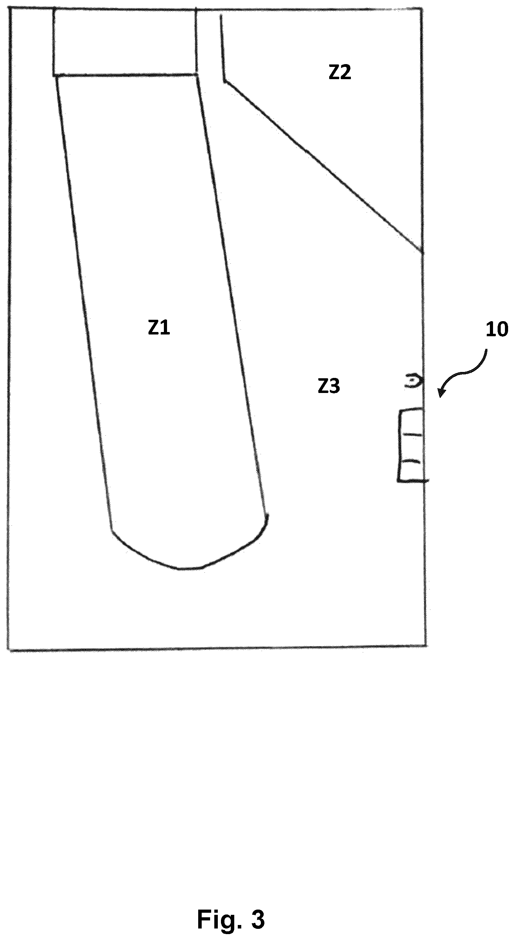

Figure 3 illustrates the traditional layout of a farrowing barn comprises a sow zone Z1 where the piglets are nursed and kept warm by the sow, a nesting zone Z2 where the piglets sleep and are kept warm, and an activity zone Z3 where the piglets have access to a drinking cup and dry feed. The weaker piglets are granted access to a liquid feed in the activity zone Z3, however the piglets are more likely to stay in the sow zone Z1 or in the nesting zone Z2, and for that reason the weaker piglets may not discover the liquid feed before it is too late.

As the clean environment inside the bottle volume reduces bacteria, it is possible to place the piglet feeder 10 in the heated nesting zone of the farrowing barn with a minimal risk of the feed turning foul thereby increasing the likelihood of the weaker piglets surviving.

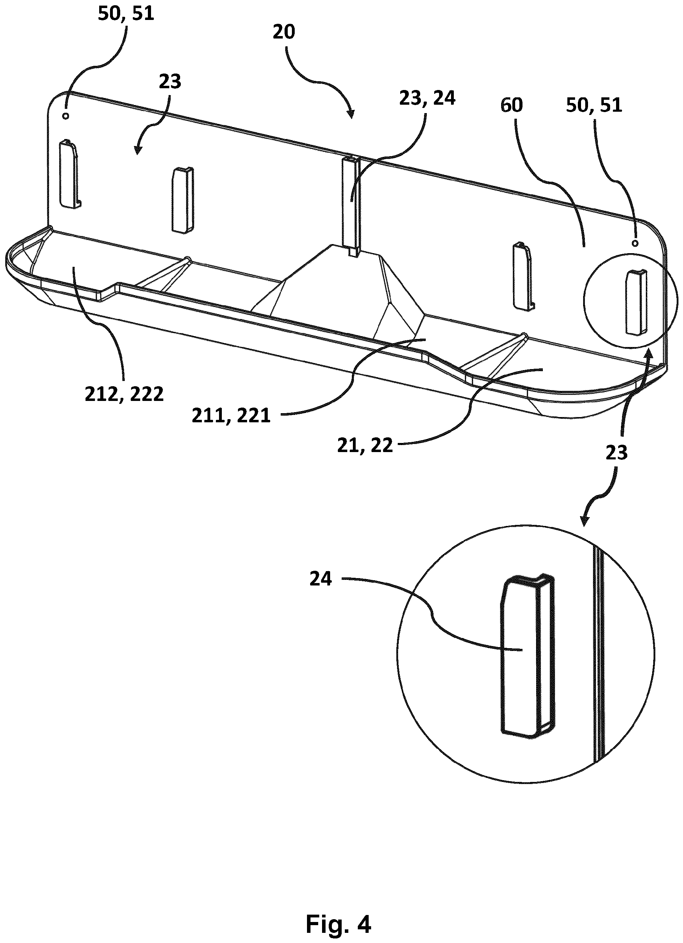

Figure 4 discloses a trough 20 comprising three trough sections 21, 211, 212 each comprising a corresponding trough section volume 22, 221, 222. The trough section volumes 22, 221, 222 are separated by partition walls configured for preventing the content of one trough section volume to mix with neighbouring trough section volumes.

A flange 60 extends upwardly along the neighbouring trough sections 21. The flange 60 comprise a mounting element 50 in the form of two mounting apertures 51 configured of engaging fastening means such as screws or bolts when mounting the piglet feeder 10 on a wall. The mounting apertures 51 are positioned to evenly distribute the load of the piglet feeder 10.

Each trough section 21, 211, 212 has a trough connector 23 placed on the flange, configured for retaining a feeding unit. The trough connector 23 may comprise a single slide bar 24 or a pair of slide bars 24. The trough connectors 23 arranged on the two end trough sections 21, 212 each comprise a pair of L-shaped slide bars 24, while the trough connector 23 arranged on the intermediate trough section 211 comprise a single T-shaped slide bar 24. In an embodiment, all the tough connectors may be the same type.

The slide bars 23 comprise a movement restrictor at the lower end configured for stopping the retainer connector 32 when sliding in the slide bars 24 to ensure a minimum feed volume 25.

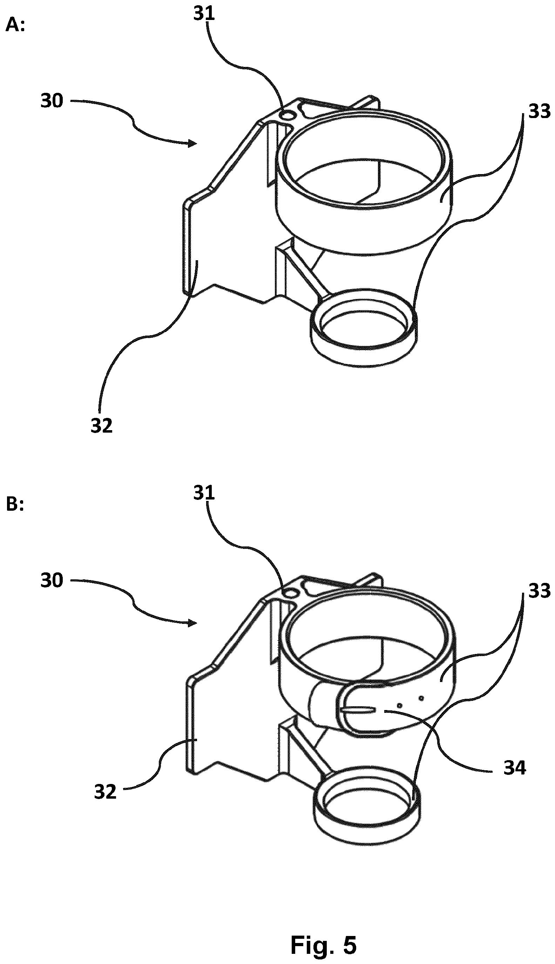

Figure 5A illustrates a retainer 20 comprising two braces 33, a threaded channel 31, and a retainer connector 32. The bottom brace 33 is configured for supporting the bottle near the feed port 41 where the bottle 40 is tapering in and the top brace is configured for supporting the circumference of a bottle 40.

The retainer connector 32 is shaped complementary to the trough connector 23 and configured for being in sliding communication with the slide bars 24 In an embodiment, as illustrated in figure 5B, the top brace 33 comprises circumference adapting means 34 configured for adapting to a variety of bottles 40 with different circumferences. The braces 33 may be of different materials.

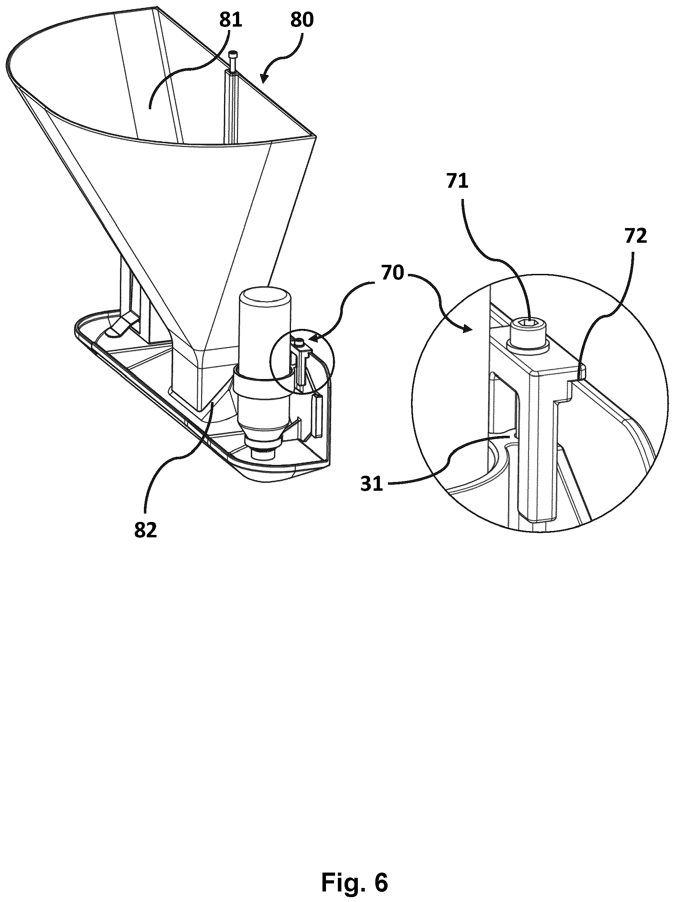

The threaded channel is configured for being engaged with a bolt 71 placed through a feed adjuster unit 70 connected to the flange 60. As illustrated on figure 6, the feed adjuster unit 70 comprise a protrusion 72 for engaging the top of the flange 60 or a recess in the flange 60. The feed adjuster unit 70 further comprises legs configured for supporting the body of the retainer 30. The legs are created as the protrusion 72 creates a gap shaped complementary to the retainer 30.

Rotating the bolt 71 causes the retainer 20 to displace relative to the feed adjuster unit 70 and the flange 50, thereby increasing or decreasing the size of the feed volume 25.

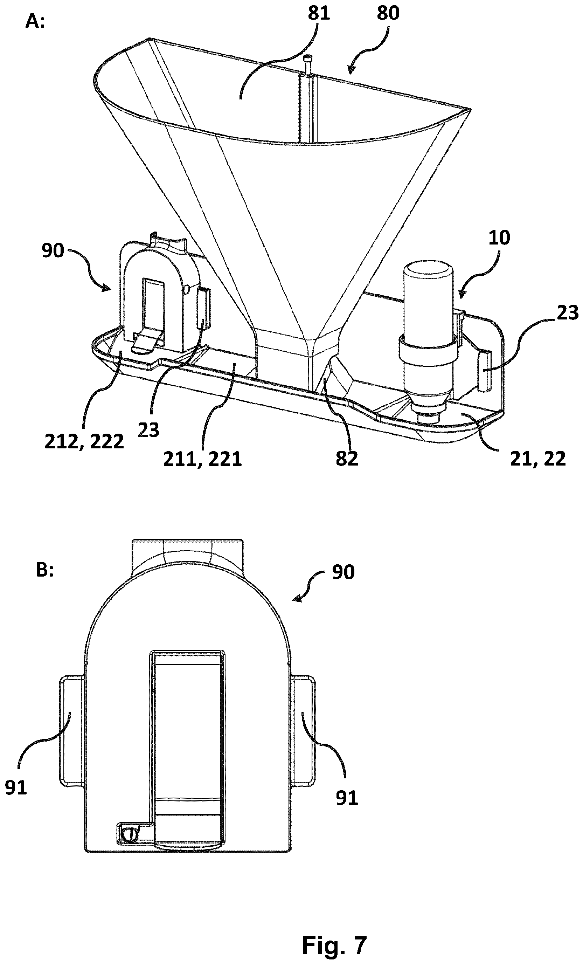

Figures 6 and 7 illustrate a kit for feeding piglets, wherein the kit comprises a piglet feeder 10 with a trough 20 comprising three trough sections 21, 211, 212. Besides the piglet feeder 10, the trough 20 comprises two additional feeding units; a dry feed distributor 80 and a liquid dispenser 90.

The dry feed distributor 80 comprises an inner containment volume 81 configured for containing dry feed and a dry feed port 82 creating a passage for the dry feed in the inner containment volume 81 to enter into the trough section volume 221. The dry feed distributor 80 further comprise a dry feed adjuster for adjusting the amount of dry feed discharged from the inner containment volume into the trough section volume 221. The dry feed distributor 80 comprise a connector shaped complementary to the corresponding trough connector 23.

The liquid dispenser 90 comprises a liquid dispenser connector 91 shaped complementary to the trough connector 23 and configured for being interchangeable with the retainer 30.

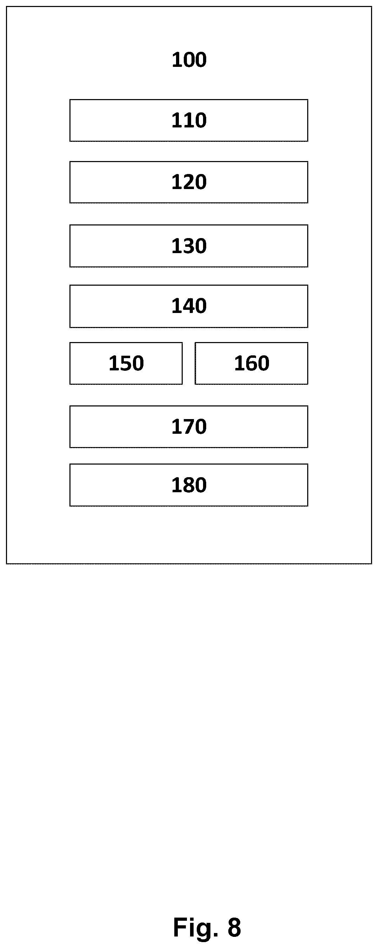

Figure 8 discloses a method 100 for feeding piglets milk, gruel, a thin porridge or semi-liquid feed used for piglets during the first 0-21 days of their lives.

The method comprises acts of:
- Providing 110 a bottle 40 comprising a bottle volume 42 for containing feed and a feed port 41 allowing feed to pass in and out of the bottle volume 42 and a trough section 21 configured for containing feed dispensed from the bottle volume 42
- Mounting 120 the bottle 40 relative to the trough section 21, wherein the feed port 41 is placed in the trough section 21 thereby defining a feed volume 25 smaller than the bottle volume 42.
- Passively releasing 130 feed from the bottle volume 42 into the feed volume 25 as the piglets remove feed from the trough section 21, thus continuously filling the feed volume 25.

As the piglets ingest the feed from the feed volume 25, the bottle volume 42 is emptied. In the case when the piglets need more feed, the following acts are added to the method:
- Removing 140 the bottle 40 from the trough section 21.
- Refilling 150 the bottle 40 with feed or alternatively replacing 160 the bottle 40 with a full second bottle 40.
- Remounting 170 the bottle 40 or the second bottle 44 in the retainer 30.

As weak piglets greatly benefit from having access to feed in a nesting zone of the farrowing barn, a step of positioning 180 the trough section 21 in a nesting zone of a farrowing barn may be added.

## Claims

1. A piglet feeder (10) for catering a viscous liquid feed, such as gruel or milk, to piglets aged 0-21 days, said piglet feeder (10) comprising:
- a trough (20) comprising a trough section (21) with a trough section volume (22) and at least one trough connector (23) at the trough section (21);
- a retainer (30) comprising a retainer connector (32) complementary to the trough connector (23) and the retainer (30) being configured for releasably retaining a bottle (40) comprising a bottle volume (42) and a feed port (41),
wherein the trough connector (23) and the retainer connector (32) are adapted such that, during use, the feed port (41) divides the trough section volume (22) by defining a feed volume (25) under the feed port (41), where said feed volume (25) being smaller than the bottle volume (42) of the bottle (40), thereby restricting the amount of feed discharged from the bottle volume (42) into the feed volume (25).

2. The piglet feeder (10) according to claim 1, wherein the retainer (30) comprises one or more braces (33) configured for supporting a circumference of the bottle (40).

3. The piglet feeder (10) according to claim 2, wherein the one or more braces (33) comprise circumference adapting means (34) adaptable for retaining different sizes of bottles (40).

4. The piglet feeder (10) according to any of the preceding claims, wherein the piglet feeder (10) comprises a mounting element (50) connected to the trough (20), the mounting element (50) comprises a mounting aperture (51) configured for mounting the piglet feeder (10) on a wall.

5. The piglet feeder (10) according to any of the preceding claims, wherein the piglet feeder (10) comprises a flange (60) upwardly from the trough section (21).

6. The piglet feeder (10) according to any of the preceding claims, wherein the at least one trough connector (23) comprises one or more slide bars (24) configured for being in sliding communication with the retainer connector (32) thus enabling the retainer to be removed from the piglet feeder (10).

7. The piglet feeder (10) according to claim 6, wherein the one or more slide bars (24) are positioned on the flange (60).

8. The piglet feeder (10) according to any of claims 5-7, wherein the piglet feeder (10) comprises a feed adjuster unit (70) connected to the flange (60), and the retainer (30) comprises a threaded channel (31), and the feed adjuster unit (70) comprises a bolt (71) extending through the feed adjuster unit (70) into the threaded channel (31), wherein rotation of the bolt (71) causes displacement of the retainer (30).

9. The piglet feeder (10) according to claim 8, wherein the feed adjuster unit (70) comprises a protrusion (72) for engaging a top of the flange (60), or the flange (60) comprises a flange recess complementary to the protrusion (72).

10. The piglet feeder (10) according to any of the preceding claims, wherein the trough (20) is made of polyester concrete.

11. The piglet feeder (10) according to any of the preceding claims, wherein the trough (20) comprises two or more trough sections (21, 211, 212) each comprising a trough section volume (22, 221, 222).

12. A method (100) for feeding piglets milk, gruel, a thin porridge, or semi-liquid feed used for piglets during the first 0-21 days of their lives, wherein the method comprises acts of:
- providing (110) a bottle (40) comprising a bottle volume (42) for containing feed, and a feed port (41) allowing feed to passage into and out of the bottle volume (42), and a trough section (21) configured for containing feed dispensed from the bottle volume (42);
- mounting (120) the bottle (40) relative to the trough section (21), wherein the feed port (41) is placed in the trough section (21) thereby defining a feed volume (25) smaller than the bottle volume (42); and
- passively releasing (130) feed from the bottle volume (42) into the feed volume (25) as the piglets remove feed from the trough section (21), thus continuously filling the feed volume (25).

13. The method (100), according to claim 12, wherein the method further comprises acts of:
- removing (140) the bottle (40) from the trough section (21);
- refilling (150) the bottle (40) with feed or alternatively replacing (160) the bottle (40) with a full second bottle (44); and
- remounting (170) the bottle (40) or the second bottle (44) in the retainer (30).

14. The method (100), according to claim 12 or 13, wherein the method further comprises a step of positioning (180) the trough section (21) in a nesting zone (Z2) of a farrowing barn.

15. A kit for feeding piglets, wherein the kit comprises:
- one or more piglet feeders (10) according to any of the previous claims, wherein the trough (20) comprises two or more trough sections (21, 211, 212) each trough section defining a trough section volume (22, 221, 222);
- one or more dry feed distributers (80) configured for being in sliding communication with at least one trough connector (23), the dry feed distributor (80) comprising an inner containment volume (81), and a dry feed port (82);
- one or more liquid dispensers (90) comprising at least one liquid dispenser connector (91) adapted for being retained by at least one trough connector (23).
